# EUROPEAN PATENT APPLICATION

(11) **EP 1 310 721 A2**
(43) Date of publication of application: **14.05.2003**
(21) Application number: 02024624.5
(22) Date of filing: 04.11.2002
(51) Int. Cl.: F16L 37/14, F16L 25/00

(54) **Electrical contact for fluid quick connectors**

(30) Priority: 12.11.2001 US 10293
(71) Applicant: ITT MANUFACTURING ENTERPRISES, INC., Wilmington, Delaware 19801 (US)
(72) Inventor: Walker, Daniel, H., Sylvan Lake, MI 48320 (US); Malone, David, S., Attica, MI 48412 (US); Szabo, George, Ortonville, MI 48462 (US)
(74) Representative: Esser, Wolfgang

(57) **Abstract**

An electrically conductive quick connector housing (12) is matingly engagable with an electrically conductive male endform (14). An electrically conductive contact member (100,120) is mounted in the bore (25,27) of the housing (12) and has an arm (110,126) extending from a mounting portion (10) which is engagable with the male endform (14) when the male endform (14) is inserted into the housing (12) to electrically connect the male endform (14) to the housing (14). The mounting portion (110) is in the form of a tubular body or an annular ring. In the case of the annular ring, angular fingers (130) project from the ring for engagement with the housing (14).

## Description

### BACKGROUND

The present invention relates, in general, to fluid quick connectors which couple male and female connector components.

Snap-fit or quick connectors are employed in a wide range of applications, particularly, for joining fluid carrying conduits in automotive and industrial application. Such quick connectors utilize retainers or locking elements for securing a male connector component, such as a tubular conduit, within a complimentary bore of a female connector component or housing. Such retainers are typically of either the axially-displaceable or radially-displaceable type. The terms "axially-displaceable" or "radially-displaceable" are taken relative to the axial bore through the female component.

In a typical quick connector with an axially displaceable, retainer, the retainer is mounted within a bore in a housing of the female connector component of housing. The retainer has a plurality of radially and angularly extending legs which extend inwardly toward the axial center line of the bore in the housing. A tube or male component to be sealingly mounted in the bore in the female component includes a radially upset portion or flange which abuts an inner peripheral surface of the retainer legs. Seal and spacer members as well as a bearing or top hat are typically mounted in the bore ahead of the retainer to form a seal between the housing and the male fitting when the male fitting is lockingly engaged with the retainer legs in the housing.

Radially displaceable retainers are also known in which the retainer is radially displaceable through aligned bores or apertures formed transversely to the main throughbore in the female component housing. The radially displaceable retainer is typically provided with a pair of depending legs which are sized and positioned to slip behind the radially upset portion or flange on the male conduit only when the male connector or conduit is fully seated in the bore in the female component. This ensures a positive locking engagement of the conduit with the female component as well as providing an indication that the conduit is fully seated since the radially displaceable retainer can be fully inserted into the female component only when the conduit has been fully inserted into the bore in the female component.

Regardless of the type of retainer, the female housing or component portion of a fluid connector typically includes an elongated stem having one or more annular barbs spaced from a first end. The barbs provide secure engagement with a hose or conduit which is forced over the barbs to connect the female housing with one end of the conduit.

In certain fluid flow applications, such as vehicle fuel delivery systems, the fast flowing fuel creates a static electric charge which must be dissipated to minimize the danger of explosion. Multi-layer tubes containing an internal electrically conductive layer have been provided for conducting any static charge buildup to an electrical ground connection to thereby dissipate the static charge. In such applications, the housing of quick connectors have been formed with conductive materials to complete a static charge conductive path between the conductive layer in the multi-layer tube connected to one end of the housing and the typically metal or conductive plastic male endform or conduit inserted into the other end of the connector housing.

However, a reliable, constant contact between the metal tube and the inner surfaces of the conductive quick connect housing is not always possible due to manufacturing tolerances. This lack of secure electrical contact can lead to build up of static electricity in the fuel system which, in turn, increases the opportunity for an explosion.

Thus, it would be desirable to provide a quick connector which maintains secure electrical contact with an internally received electrically conductive conduit.

### SUMMARY

The present invention is an electrical contact for a fluid quick connector as described in the independent and dependant claims which provides a secure electrical connection between a matingly engagable male endform and a quick connector housing.

The quick connector includes a housing having a through bore which receives the male endform. A retainer lockingly couples the male endform to the housing.

An electrically conductive contact member is mounted in the bore of the housing in contact with both the housing and the male endform to provide a secure electrically conductive path between the male endform and the quick connector housing.

The contact member includes a first body portion mountable in the housing bore in engagement with the housing and at least one arm extending from the first body portion into electrical contact with the male endform.

In one aspect, the body of the contact member is in the form of a tubular member having a longitudinal split for compressive, press-fit mounting in a fixed position in the housing bore. The at least one arm extends from one end of the tubular member.

In another aspect, the body of the contact member is in the form of an annular ring having the at least one arm extending therefrom. In this aspect, one or more locating fingers project angularly from the ring for engagement with housing to prevent movement of the contact member and to provide positive contact with the housing.

The quick connector of the present invention has a unique electrical contact member which provides a secure electrical connection between the male endform and the connector housing. This assures that static electricity does not build up in the vehicle fuel delivery system.

The contact member eliminates the intermittent contact between the metal endform and the inside diameter of the connector housing found in previous quick connector grounding designs. The contact member also eliminates the need to strip away the end portion of the plastic coating on plastic coated metal tubing to assure a ground path without sacrificing corrosion resistence. The contact member assures a positive and permanent electrical ground path through the quick connector as well as maintaining corrosion resistence due to the limited amount or no amount of plastic coating that must be stripped off the male endform or tube.

### BRIEF DESCRIPTION OF THE DRAWING

The various features, advantages and other uses of the present invention will become more apparent by referring to the following detailed description and drawing in which:
- Fig. 1: is an exploded, perspective view of a quick connector according to the present invention;
- Fig. 2: is an enlarged, left end, perspective view of the retainer shown in Fig. 1;
- Fig. 3: is an end view of the quick connector and retainer, with the retainer shown in a partially inserted, storage position;
- Fig. 4: is an end view of the quick connector and retainer, with the retainer depicted in a fully inserted, position in the female component;
- Fig. 5: is a cross sectional view generally taken along line 5-5 in Fig. 4;
- Fig. 6: is a perspective view of the contact member according to one aspect of the present invention;
- Fig. 7: is a side perspective view of the quick connector showing the contact member of Fig. 6 in an operative, mounted position within the quick connector housing;
- Fig. 8: is a perspective view of a contact member according to another aspect of the present invention;
- Fig. 9: is a longitudinal cross-sectional, bottom view showing the orientation of the elements of the quick connector in a pre-inserted endform position; and
- Fig. 10: is a longitudinal cross-sectional, bottom view showing the fully inserted endform position in the quick connector.

### DETAILED DESCRIPTION

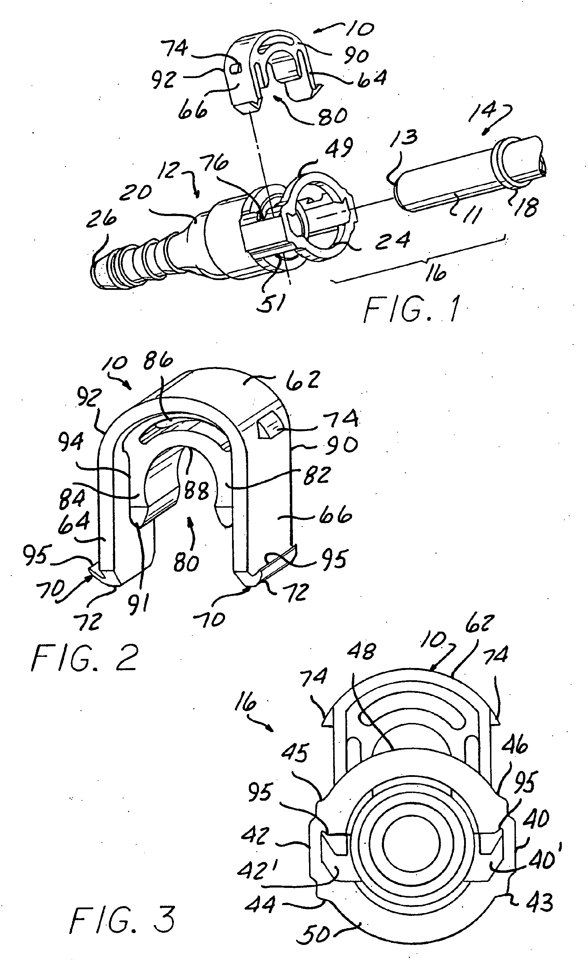

For clarity in understanding the use and operation of the present invention, reference will first be had to Figs. 1-5 which depict a retainer 10 which lockingly couples female and male components 12 and 14, respectively, of a quick connector 16.

The following description of the female connector component or element 12 is by way of example only as the female connector component 12 may have any suitable shape typically found in quick connectors.

Further, the following description of the use of the quick connector to connect tubular members will be understood to apply to the connection of conduits, hoses, and/or solid metal or plastic tubes to each other in fluid flow communication. The end of a conduit or tubular member inserted into the interior of one end of the quick connect will be defined as an endform. The endform can be a separate member which receives a separate hose or conduit at one end or a shape integrally formed on the end of an elongated metal or plastic tube. Further, the endform can be integrally formed on or mounted as a separate element to a fluid use device, such as a pump, filter, etc., rather than as part of an elongated conduit.

The present quick connector finds advantageous use with tubular members, such as conduits, tubes, or hoses which are capable of defining a continuous electrically conductive path through the tubular member itself or through a conductive layer or portion of the tubular member. For example, conductive layers have been provided in multi-layer tubes as disclosed in U.S. Patent Nos. 5,524,673, and 5,743,304. Reference is made to these conductive layers which provide an electrically conductive path from the quick connector of the present invention to a remote electrical ground to dissipate static electric charges which can build up within the fuel system due to fast flowing fluids, such as vehicle fuels.

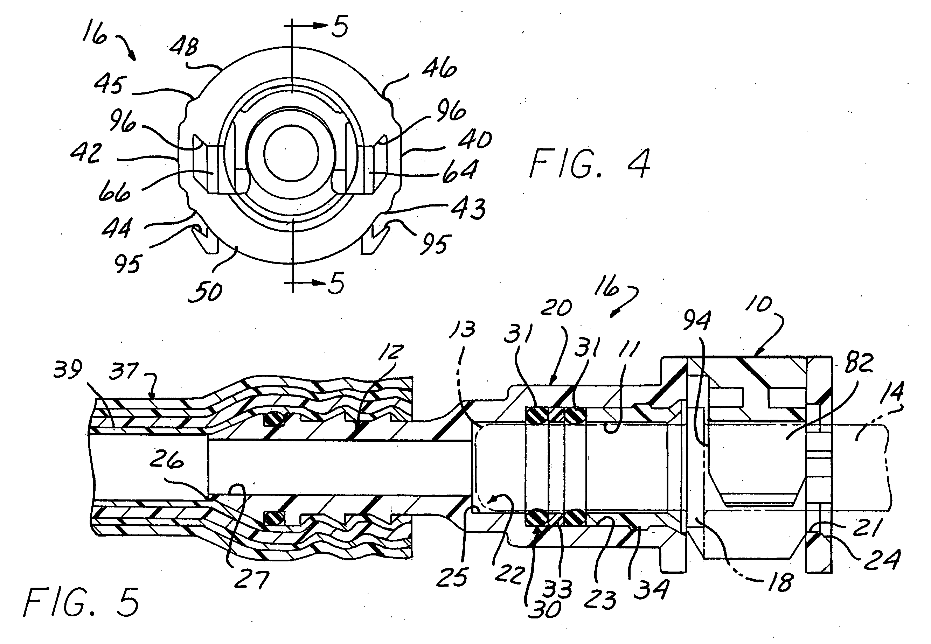

The female component 12 includes a housing 20 having an elongated, axially extending, internal stepped bore 22, shown in detail in Fig. 5, extending from a large diameter first, open end 24 to a smaller diameter, second open end 26. The stepped bore 22 includes a first bore portion 21 extending from an opening at the first end 24 of the housing 20 to a second smaller diameter second stepped bore portion 23. A third yet smaller diameter stepped bore portion 25 extends axially from one end of the second stepped bore portion 23 and communicates to a still smaller fourth stepped bore portion 27 which extends to the open second end 26 of the housing 20.

As is conventional, a top hat or bearing 34 is mounted in the second stepped bore portion 23 immediately adjacent the end of the first bore portion 21. A seal means 30 is also mounted in the second stepped bore portion 23 between one end of the top hat 34 and the third stepped bore portion 25.

The inner diameter of the first stepped bore portion 21 is sized to slidably receive the outer diameter of the radially enlarged flange or upset bead 18 formed on the male component or fitting 14. Further, the inner diameters of the seal means 30 and the top hat 34 are sized to sealingly engage the outer diameter of the end portion 11 of the male component 14 extending from the radially enlarged flange 18 to the tip end 13 of the male component 14. The third stepped bore portion 25 has an inner diameter sized to snugly engage the outer diameter of the end portion 11 of the male component 14 when the male component 14 is fully inserted into the stepped bore 22 as described hereafter.

As shown in Figs 1, 3,and 4, the first end 24 of the housing 12 is formed with a pair of opposed, exterior flat surfaces 40 and 42. The flat surfaces 40 and 42 are diametrically opposed on the first end 24 and may be centrally located on each diametrical side of the first end 24. The adjacent surfaces of the housing 20 to one side of the flat surfaces 40 and 42 form an opposed pair of lock surfaces or flats, such as a first flat 43 and a second flat 44. A second pair of flats 45 and 46 are formed on the housing 12 or the other side of the flat surfaces 40 and 42. The flats 43 and 44 extend axially a short distance from the first end 24 of the housing 20. Opposed surfaces 48 and 50 of the first end 24 of the housing 20 between the flats 43 and 44 and the flats 45 and 46 have a generally arcuate shape as shown in Figs. 3 and 4. Apertures 49 and 51 are formed respectively in each surface 48 and 50. The apertures 49 and 51 are aligned to form a transverse bore extending through the first end 24 of the housing 20 which is disposed in communication with the first bore portion 21 in the housing 20.

The retainer 10, described hereafter, is by way of example only as other radially-displaceable retainer designs having side locking projections may also employ the release tool of the present invention. Alternately, the housing 12 can be reconfigured to receive an axial-type retainer.

The retainer 10 is formed of a one-piece body of a suitable plastic, such as polyketone, for example, and has an end wall 62 formed of a generally curved or arcuate shape, by way of example only, and first and second spaced side legs 64 and 66. The side legs 64 and 66 extend generally parallel to each other from opposite ends of the end wall 62. Further, each side leg 64 and 66 has an outer end 72, although it is also possible to connect the side legs 64 and 66 at a lower portion by an arcuate member.

A pair of projections 70 extend along the length of the retainer 10 between opposed side edges of the side legs 64 and 66, respectively. The projections 70 are located adjacent the outer end 72 of each leg 64 and 66. The projections 70 engage surfaces on the housing 12 to position the retainer 10 in the shipping position shown in Fig. 3, or in the fully inserted, latched position shown in Figs. 4 and 5.

Further, a pair of outward extending lock tabs or edges 74 are formed adjacent the end wall 62 on each side leg 64 and 66.

As shown in Figs. 1 - 5, the retainer 10 includes a radially flange receiving means 80 which is preferably carried as an integral, one-piece part of the retainer 10. The radial flange receiving means 80 includes first and second depending arms 82 and 84 which extend from a boss or enlargement 86 integrally formed on the inner surface of the end wall 62 of the retainer 10. An inverted, U-shaped slot 88 is formed on the inner surfaces of the arms 82 and 84 and the boss 86 which is sized to snugly conform to the outer diameter of the tubular portion 11 of the male component 14. The outer ends 91 of each of the arms 82 and 84 are angled or tapered to act as a guide surface to assist in sliding movement of the arms 82 and 84 over the tubular end 11 of the male component 14.

As shown in Figs. 1 and 2,each of the arms 82 and 84 extends from one side end contiguous with a first side end 90 of the retainer 10 to an opposed side end contiguous with a second side end 92 of the retainer 10.

As shown in Figs. 1, 2, 3 and 4, the projections 70 on the legs 64 and 66 of the retainer 10 are formed with an angled hook-like shape terminating in a tip 95. The tip 95 is disposed at an acute, upturned angle with respect to the corresponding legs 64 and 66.

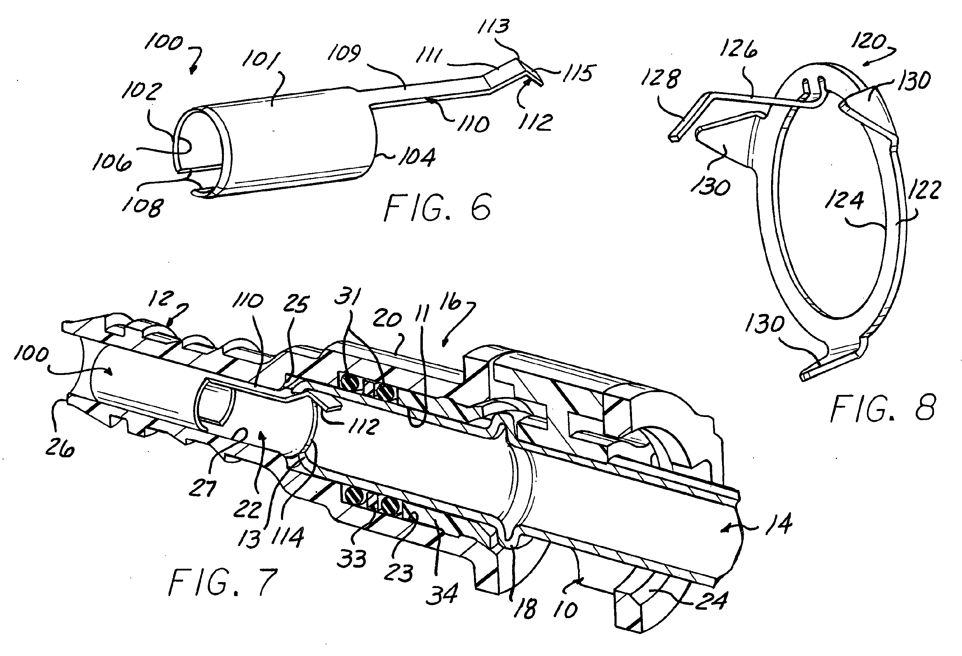

Similarly, as shown in Figs. 3 and 4, and in greater detail in Fig. 6, the grooves 40' and 42' are formed in the interior of the flat surfaces 40 and 42, respectively, and include a recess or notch 96 at one end which is shaped complimentary to the shape of the tip 95 of the projection 70 on each of the legs 64 and 66 of the retainer 10. In this manner, pull out of the retainer 10 from the housing 12 is resisted by the interlocking tips 95 on the legs 64 and 66 of the retainer 10 which are seated within the notches 96 in the grooves 40' and 42' in the housing 12 as shown in the partially inserted, shipping position of the retainer 10 in Fig. 3. The flats or lock edges 44 and 46 are disposed at an angle complimentary to the acute angle of the tips 95 on the legs 64 and 66 of the retainer 10. This enables interlock of the tips 95 with the flats 44 and 46 resists pull out of the retainer 10 from the housing 12 from the fully latched position shown in Fig. 4.

The hook shaped tips 95 on the legs 64 and 66 of the retainer 10 in conjunction with the grooves 40' and 42' in the housing 12 also provide, a distinct, "avalanche effect" snap action of the retainer 10 in the housing 12. The grooves 40' and 42' in the housing 12 are formed in generally planar flat surfaces. The inner surfaces force the ends 72 of the legs 64 and 66 laterally inward toward each other when the retainer 10 is inserted into the housing 12. When the tips 95 clear one edge of the grooves 40' and 42', the resilient nature of the legs 64 and 66 snaps the ends 72 and the tips 95 laterally outward to create an "avalanche effect" which provides a distinct tactile feedback to the user indicating that the retainer has lockingly engaged the housing 12 in either the partially inserted position shown in Fig. 3 or the fully inserted position shown in Fig. 4.

It should be noted that further insertion force on the retainer 10 moving the retainer 10 from the partially inserted position shown in Fig. 3 to the fully inserted position shown in Fig. 4 again causes the end 72 of the legs 64 and 66 to be urged laterally inward when the tips 95 of the legs 64 and 66 slide along the lower portion of the inner surfaces. When the tips 95 clear the outer end of the inner surfaces, the legs 64 and 66 spring laterally outward in a distinct "avalanche effect" manner. The lower ends of the grooves 40' and 42' are angled to enable the tips 95 to slide out of the grooves 40' and 42' toward the fully latched position.

The retainer 10 can be first be installed on the housing 12 in a shipping or storage position as shown in Fig. 3. In this position, the projections 70 on the side legs 64 and 66 of the retainer 10 snap into and engage the longitudinally extending grooves 40' and 42'.

Further insertion of the retainer 10 through the aligned apertures 49 and 51 in the housing 12 causes the ends 72 of the legs 64 and 66 to pass along the lower portion of the inner surfaces of the flat surfaces 40 and 42 until the tips 95 clear the ends of the surfaces and then snap outward exteriorly of the outer surface of the first end 24 of the housing 12 as shown in Fig. 4. In this fully inserted position of the male component 14 in the female component 12, the annular flange 18 on the male component 14 is situated ahead the arms 82 and 84 of the retainer 10. This position represents the fully latched position in which the male component 14 is fully seated in and lockingly engaged with the female component 12. The full insertion of the retainer 10 into the housing 12 also provides visible indication of the fully locked connection of the male and female components 14 and 12, respectively.

It should be noted that if the male component 14 is not fully engaged or seated within the housing 12, the annular flange 18 on the male component 14 will not be properly situated within the transverse bore in the housing 12 to slidably receive the arms 82 and 84 in the retainer 10. If the annular flange 18 on the male component 14 is at any position other than shown in phantom in Fig. 5, the arms 82 and 84 on the retainer 10 will contact the annular flange 18. Since the spacing between the inner surfaces of the legs 82 and 84 is less than the outer diameter of the annular flange 18, the retainer 10 cannot be moved to the fully inserted position thereby providing an indication of an incomplete seating or mounting of the end portion 11 of the male component 14 in the housing 12.

According to one aspect of the present invention, which is shown in detail in Figs. 6 and 7, a contact member 100 is disposed within the housing 20 of the female component 12 to provide secure electrical contact between the conductive male endform component 14 and the conductive female component 12. In this aspect, the housing 20 is formed to be electrically conductive, either by being formed of a conductive metal or, when formed of a plastic, being doped or filled with a sufficient amount of electrically conductive particles to render the housing 20 electrically conductive. Likewise, the male component 14, in this aspect, is also conductive by being made of a conductive metal or a plastic filled with a sufficient amount of conductive particles to render the entire male component 14 electrically conductive.

The contact member 100 is formed as a body of a conductive material, such as a conductive metal, or, if formed of plastic, doped with sufficient conductive particles to render the entire contact member 100 electrically conductive. In this aspect of the invention, the contact member 100 is in the form of a tubular body 101 having a first end 102 and an opposed second end 104. A bore 106 extends through the tubular body 101 between the first and second ends 102 and 104. A through slot is formed in the tubular body 101 forming opposed longitudinally extending edges 108 which allow the tubular body 101 to be compressed in diameter upon insertion into one bore portion 27 of the through bore 22 in the housing 20 and, when released, to expand radially outward into a tight, press-fit with the inner surface of the bore portion 27. This fixedly positions the tubular body 101 of the contact member 100 in the stepped bore portion 27 of the housing 20.

The first end 102 of the tubular body 101 has a chamfer in the form of a angled or radiused edge, as shown in Fig. 6, which acts as a lead-in surface to prevent damage to the interior surface of the bore portion 27 when the contact member 100 is forcibly inserted into the bore portion 27.

At least one and possibly more arms 110 project, preferably unitarily, from one end, such as the second end 104 of the tubular body 101. The arm 110 is cantilevered to the tubular body 101 and has a bent end 112. The arm 110 includes a cantilevered beam 109 extending from the second end 104 of the tubular body 101. The beam 109 translates into a back taper portion 111 which extends at an obtuse angle from the plane of the beam 109 to an edge 113. A front taper or tip end 115 projects from the edge 113 at an obtuse angle with respect to the back taper portion 111 toward the plane of the beam 109.

As shown in Fig. 7, when the tubular body 101 of the contact member 100 is mounted in position in the bore portion 27, the bent end 112 of the arm 110 projects into the adjacent, larger bore portion 25. During insertion of the endform 14 into the bore 16 in the housing 12, the bent end 112 of the arm 110 coacts with the tip end 13 of the endform 14 such that the tip end 13 of the endform 14 will initially contact the tip end 115 of the bent end 112 of the arm 110 and displace the entire arm 110 in a radially inward direction in the bore portion 27 of the housing 12 until the tip end 115 slides over the edge 113 on the bent end 112 and along the back taper portion or surface 111 of the arm 110. At this time, the arm 110 snaps radially outward to its nominal position placing the edge 113 and a portion of the back taper portion 111 in secure, continuous electrical contact with the inner, non-coated surface of the endform 14. It should be noted that the back taper surface 111 of the arm 110 may, in this position, be in contact with the edge of the tip end 13 surrounding the opening 114 in the endform 14.

It should be noted that the back taper portion or surface 111 of the arm 110 has a length and is disposed at an obtuse angle with respect to the beam 109 so as to provide a clearance space from the adjacent shoulder 25 and inner surface of the bore portion 23 of the housing 12 to allow for insertion of the tip end 13 of the endform 14 therein without an overly bending force being exerted by the tip end 13 of the endform 14 on the arm 110.

This electrical connection insures a continuous electrically conductive path through the quick connector 16 which enables any static electrical charge generated by fluid flowing through the connector housing 20 to be dissipated through the quick connector 16 and any connected component, such as the aforementioned multi-layer tube which is provided with an inner electrical charge dissipation conductive layer 39, as shown in Fig. 5.

Referring now to Figs. 8-10, there is depicted another aspect of a contact member usable in the quick connector 16. In this aspect, the contact member 120 includes a body in the form of an annular ring 122 having a through bore or aperture 124 therethrough. The contact member 120 is formed of a conductive material, such as a conductive metal or a conductively doped plastic. At least one or more elongated arms 126 projects from the ring 122 and terminates in a lead-in shaped, bent end 128.

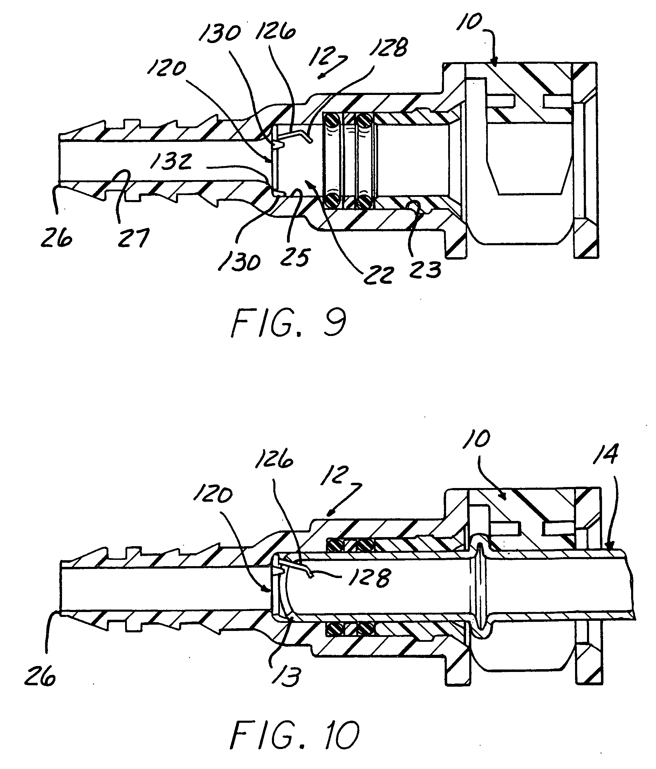

The bent end 128 is disposed at an obtuse angle with respect to the main portion of the arm 126 and extends radially inward toward a longitudinal axis through the ring 122. This places the bent end 128, when mounted in the bore portion 25 of the housing 12 in a position to contact the tip end 13 of the endform 14 during insertion of the endform 14 into the housing 12. Further insertion of the endform14 into the housing 12 causes the tip end 13 of the endform 14 to slide along the exterior surface of the bent end 128 in the arm126 until the endform 14 reaches a fully inserted position as shown in Fig. 10. In this position, the inner edge of the open end of the endform 14 is disposed in contact with the arm 126. Although the bent end 128 is illustrated as being spaced from the inner surface of the endform 14, depending on the length of the arm 126, a portion of the bent end 128 could be disposed in contact with the inner surface of the endform 14.

In this aspect of the contact member 120, a plurality of locating fingers 130, with three locating fingers 130 being shown by example only, project angularly in a radially outward manner from a side edge of the ring 122. The fingers 130 are adapted to engage the inner surface of the bore 22 in the housing 20 to center and fixedly locate the contact member 120 to the housing 20.

As shown in Fig. 9, the contact member 120 is mounted in the bore 22 of the quick connector housing 12 against a shoulder 132 formed between the bore portions 25 and 27 of the through bore 22 in the housing 20. The ring 122 seats against the shoulder 132. In this orientation, the arm 126 projects longitudinally into the bore portion 25 of the quick connector housing 12 and is positioned to enable the bent end 128 to slide into the open end of the male endform 14 when the male endform 14 is inserted into the bore 22 in the housing 12 as shown in Fig. 10. In this position, the arm 126 securely contacts the edges of the open end 114 of the inner surface of the bore 22 of the conductive male endform 14. Since the ring 122 of the contact member 120 is fixedly seated in contact with the housing 12, a secure electrical connection is formed between the male endform 14 and the quick connector housing 12 by the contact member 120.

## Claims

1. A fluid quick connector (16) comprising:
a connector housing (20) configured to mate with a male endform (14); and
an electrically conductive contact member (100, 120) mounted in the housing (20) and contacting the male endform (14) to electrically connect the male endform and the quick connector housing.

2. The fluid quick connector (16) of claim 1 wherein the contact member (100, 120) comprises:
a first portion (101, 120) mountable in the quick connector housing bore (27, 25) in contact with the quick connector housing (20); and
at least one arm (110, 126) extending from the first portion (101, 120) for contact with the male endform (14).

3. The fluid quick connector (16) of claim 2 further comprising:
the arm (110,126) extendable through an open end of the bore in the male endform (14) in contact with a surface of the male endform.

4. The fluid quick connector (16) of claim 2 or 3 further comprising:
the arm (110, 126 ) having a bent end (112, 128) extendable into the male endform.

5. The fluid quick connector (16) of claim 4 wherein the arm (110) and the bent end (112) comprise:
a beam portion (109) extending from the first portion (101) of the contact member;
a back taper surface (111) extending angularly from the beam portion; and
a tip end (115) extending angularly from an edge at one end of the back taper surface and defining a lead-in surface adapted to be engaged by a tip end (13) of the endform.

6. The fluid quick connector of claim 5 wherein:
the back taper surface (111) extends at an obtuse included angle with respect to the beam; and
the tip end (115) extends at an obtuse included angle from the back taper surface.

7. The fluid quick connector of at least one of claims 1 to 6 wherein the first portion (101) comprises:
a tubular body mountable in the bore (27) in the quick connector housing (20), the arm extending from one end of the tubular body.

8. The fluid quick connector of claim 7 wherein:
the tubular body (101) is longitudinally split to form spaced edges (108) allowing compression of the tubular body for press-fit mounting of the tubular body in the bore in the quick connector housing.

9. The fluid quick connector of claim 7 or 8 wherein the tubular body further comprises:
another end oppositely formed from the one end of the body, a lead-in edge formed on the another end.

10. The fluid quick connector of at least one of claims 1 to 4 wherein the first portion of the contact member (120) comprises:
an annular ring (122) mountable in the bore (25) in the quick connector housing, the arm (126) extending from the annular ring.

11. The fluid quick connector of claim 10 further comprising:
the arm (126) having a bent end (128) extendable through an open end of a bore in the male endform.

12. The fluid quick connector of claim 10 or 11 further comprising:
at least one finger (130) extending angularly from the annular ring (122) of the contact member, the at least one finger engagable with an end of the male endform.

13. The fluid quick connector of claim 10,11 or 12 wherein:
the annular ring (122) is mountable in registry with a shoulder between two stepped bore portions of the through bore in the quick connector housing.

14. The fluid quick connector of at least one of claims 1 to 13 further comprising:
the quick connector housing (20) and the male endform (14) being formed of an electrically conductive material.

15. A fluid quick (16) connector comprising:
a connector housing (20) configured to mate with a male endform (14) along a first axis;
the quick connector housing (20) and the male endform (14) being formed of an electrically conductive material; and
a contact member (110, 120) having a first portion (101, 122) fixedly mountable in a bore (27, 25) in the housing, and at least one arm (110, 126) extending from the first portion adapted to extend through an open end of a bore in the male endform (14) to dispose the arm in contact with the male endform.

16. An electrical contact (110, 126) for a fluid quick connector (16) having a connector housing (20) configured to mate with a male endform (14), the electrical contact comprising:
an electrically conductive contact member (100, 120) adapted to mount in a quick connector housing (20) to electrically connect a male endform inserted into the housing to the quick connector housing.

17. The electrical contact of claim 16 wherein the contact member (100, 120) comprises:
a first portion (101, 120) adapted to be mountable in the quick connector housing bore (27, 25) in contact with the quick connector housing; and
at least one arm (110, 126) extending from the first portion (101,120) adapted for contact with the male endform (14) inserted into the housing bore.

18. The electrical contact of claim 17 further comprising:
the arm (110,126) adapted to be extendable through an open end of the bore in the male endform (14) into contact with a surface of the male endform.

19. The electrical contact of claim 17 or 18 further comprising:
the arm (110, 126) having a bent end (112, 128) adapted to be extendable into the male endform.

20. The electrical contact of claim 19 wherein the arm and the bent end comprise:
a beam portion (109) extending from the first portion (101) of the contact member;
a back taper surface (111) extending angularly from the beam portion; and
a tip end (115) extending angularly from an edge at one end of the back taper surface and defining a lead-in surface adapted to be engaged by a tip end (13) of the endform.

21. The electrical contact of claim 20 wherein the arm and the bent end comprise:
the back taper surface (111) extends at an obtuse included angle with respect to the beam; and
the tip end (115) extends at an obtuse included angle from the back taper surface.

22. The electrical contact of at least one of claims 17 to 21 wherein the first portion of the contact member comprises:
a tubular body (101) adapted to be mountable in the bore (27) in the quick connector housing (20), the arm extending from one end of the tubular body.

23. The electrical contact of claim 22 wherein:
the tubular body (101) is longitudinally split to form spaced edges (108) allowing compression of the tubular body for press-fit mounting of the tubular body in the bore in the quick connector housing.

24. The electrical contact of claim 22 or 23 wherein the tubular body further comprises:
another end oppositely formed from the one end of the body, a lead-in edge formed on the another end.

25. The electrical contact of at least one of claims 17 to 19 to wherein the first portion of the contact member comprises:
an annular ring (122) adapted to be mountable in the bore (25) in the quick connector housing, the arm (126) extending from the annular ring.

26. The electrical contact of claim 25 further comprising:
the arm (126) having a bent end adapted to extend through an open end of a bore in the male endform.

27. The electrical contact of claim 25 or 26 further comprising:
at least one finger (130) extending angularly from the annular ring of the contact member, the at least one finger adapted to engage the housing bore.

28. The electrical contact of claim 25, 26 or 27 wherein:
the annular ring (12 is adapted to be mounted in registry with a shoulder between two stepped bore portions of the through bore in the quick connector housing.

29. An electrical contact (110, 120) for a fluid quick connector having a connector housing configured to mate with a male endform, the electrical contact comprising:
a contact member (110, 120) having a first portion (101, 126) fixedly adapted to be mountable in a bore (27, 25) in the housing, and at least one arm (110, 126) extending from the first portion adapted to extend into contact with the male endform (14).
